Europäisches Patentamt

European Patent Office

Office européen des brevets

(11) Numéro de publication: **0 282 120 B1**

## (12) FASCICULE DE BREVET EUROPEEN

(45) Date de publication de fascicule du brevet: **23.09.92**    (51) Int. Cl.⁵: **A01D 17/00**

(21) Numéro de dépôt: **88200362.7**

(22) Date de dépôt: **26.02.88**

(54) **Barreau pour tapis transporteur, équipé de tiges d'acier entourées d'un matériau plus ou moins souple.**

(30) Priorité: **09.03.87 BE 8700225**

(43) Date de publication de la demande:
**14.09.88 Bulletin  88/37**

(45) Mention de la délivrance du brevet:
**23.09.92 Bulletin  92/39**

(84) Etats contractants désignés:
**AT BE CH DE ES FR GB GR IT LI LU NL SE**

(56) Documents cités:
**BE-A- 890 475**
**US-A- 3 253 699**
**US-A- 3 618 747**

(73) Titulaire: **P.V.B.A. AVR-MACHINERY**
**Meensesteenweg, 529**
**B-8810 Roeselare(BE)**

(72) Inventeur: **Nollet, Norbert**
**Meensesteenweg 529**
**B-8810 Roeselare(BE)**

(74) Mandataire: **Pieraerts, Jacques et al**
**Bureau Gevers S.A. rue de Livourne 7 bte 1**
**B-1050 Bruxelles(BE)**

# Description

La présente invention est relative à un barreau pour tapis transporteur de pommes de terre et tubercules analogues constitué d'une tige d'acier (1) entourée d'un matériau souple. Un tel barreau est connu par le document BE-A-890475.

Le but de l'invention est de proposer un barreau pour tapis transporteur de pommes de terre et tubercules analogues qui permet la réalisation de tapis transporteurs qui n'endommagent à aucun moment les pommes de terre qui sont déplacés sur ces tapis avec le feuillage et une certaine quantité de terre.

Afin de blesser le moins possible les pommes de terre ou des tubercules analogues ces barreaux sont recouverts de caoutchouc ou d'une matière synthétique. De tels barreaux recouverts de caoutchouc abîment, malgré ces précautions, les pommes de terre qui heurtent ces barreaux. Les pommes de terres endommagées, même faiblement, présentent des taches noires ce qui est peu désirable attendu que ceci diminue fortement la valeur des pommes de terre récoltées ou triées de la sorte. Ceci cause de gros problèmes à l'industrie qui utilise la pomme de terre.

Pour réaliser les objectifs conformément a l'invention, ledit matériau souple présente une lèvre élastique (7) qui, selon une coupe transversale du barreau, fait corps avec ledit matériau souple recouvrant la tige d'acier (1) et ceci sur la face latérale du barreau qui, en considérant le sens d'avance du tapis se trouve à l'avant, puis s'étend vers l'arrière à une distance du matériau souple entourant la tige d'acier (1).

D'autres détails et avantages de l'invention ressortiront de la description qui sera donnée ci-après d'un barreau pour tapis transporteur, selon l'invention. Cette description n'est donnée qu'à titre d'exemple et ne limite pas l'invention. Les notations de référence se rapportent aux figures ci-jointes.

Les figures 1 à 5 sont des coupes menées au travers de barreaux selon des formes d'exécution existantes et connues.

La figure 6 est une coupe au travers d'un barreau selon l'invention.

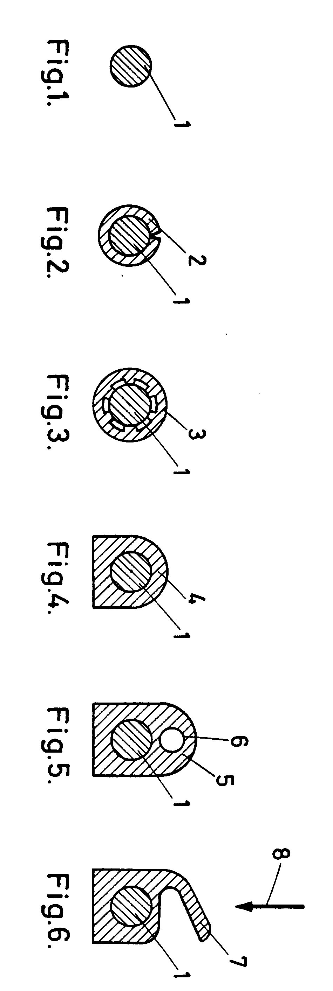

Le barreau selon la figure 1 est une tige métallique ordinaire 1 tandis que le barreau selon la figure 2 représente un barreau similaire 1 recouvert d'un tuyau en PVC.

A la figure 3 est encore représentée en coupe une autre forme d'exécution. La tige d'acier 1 est recouverte d'une "étoile" 3 en PVC.

A la figure 4 un tuyau 4 en caoutchouc est vulcanisé sur la tige 1 tandis que dans la forme d'exécution selon la figure 5 le tuyau en caoutcouc 5 se prolonge d'un côté et présente un orifice 6.

Cet orifice 6 forme un matelas d'air.

La forme d'exécution selon la figure 5 est la moins désavantageuse, mais est un solution onéreuse en raison des difficultés du procédé de fabrication.

Selon la figure 6, qui concerne la forme d'exécution selon l'invention, on dispose également autour de la tige métallique 1 un matériau souple. De préférence ce matériau souple est du caoutchouc qui peut être vulcanisé sur la tige 1. Le matériau souple a une forme telle qu'en avant de la tige 1, en considérant le sens selon lequel se déplacent les pommes de terre sur le tapis, se trouve une lèvre élastique 7.

Les pommes de terre qui roulent le long du tapis selon la flèche 8 (figure 6) et entrent en contact avec cette lèvre élastique ne sont absolument pas abîmées parce que la matière élastique amortit entièrement le choc. Lors d'un choix judicieux du matériau souple, la lèvre élastique revient automatiquement vers une position de repos de telle sorte que l'action amortissante de celle-ci est toujours présente. Un tapis équipé de barreaux selon la figure 6 offre d'excellents résultats.

Il est évident que pour la lèvre élastique 7 on pourrait imaginer une autre forme que celle qui est donnée à titre d'exemple par la figure 6.

L'invention se caractérise par le fait que la tige métallique 1 n'est pas seulement protégée par la couche environnante en caoutchouc mais qu'une partie du matériau environnant est réalisé pour former un élément souple, par exemple sous la forme d'une lèvre élastique. Le mouvement élastique de va-et-vient de la partie du matériau à base de caoutchouc qui entoure la tige 1 peut en effet être réalisé en donnant une autre formé à la lèvre 7.

## Revendications

1. Barreau pour tapis transporteur de pommes de terre et tubercules analogues constitué d'une tige d'acier (1) entourée d'un matériau souple, caractérisé en ce que ledit matériau souple présente une lèvre élastique (7) qui, selon une coupe transversale du barreau, fait corps avec ledit matériau souple recouvrant la tige d'acier (1) et ceci sur la face latérale du barreau qui, en considérant le sens d'avance du tapis se trouve à l'avant, puis s'étend vers l'arrière à une distance du matériau souple entourant la tige d'acier (1).

## Claims

1. A bar for a conveyor belt for potatoes and similar tubers, consisting of a steel rod (1) surrounded by a supple material, characterised in that the said supple material exhibits an elastic lip which, viewed in cross-section of the bar, is integral with the said supple material covering the steel rod (1) and in particular is integral on that side face of the bar which, viewed in the direction of travel of the belt, is at the front, and then extends backwards at a distance from the supple material surrounding the steel rod (1).

**Patentansprüche**

1. Förderstange für ein Förderband für Kartoffeln und ähnliche Knollen, welche aus einer von einem flexiblen Material eingehüllten stahlstab (1) besteht, dadurch gekennzeichnet, daß das flexible Material eine elastische Lippe (7) aufweist, die in einem Querschnitt durch die Stange mit dem den Stahlstab (1) einhüllenden flexiblen Material eine Einheit bildet und welche sich auf der Seitenfläche der Förderstange, die sich, bezogen auf die Bewegungsrichtung des Bandas vorne befindet, dann in einem Abstand von dem den Stahlstab (1) einhüllenden flexiblen Material nach hinten erstreckt.

Fig.1.

Fig.2.

Fig.3.

Fig.4.

Fig.5.

Fig.6.

4